Europäisches Patentamt

European Patent Office

Office européen des brevets

(11) Veröffentlichungsnummer: **0 259 851 B1**

## EUROPÄISCHE PATENTSCHRIFT

(45) Veröffentlichungstag der Patentschrift: **18.03.92**

(51) Int. Cl.$^5$: **C08F 220/54**

(21) Anmeldenummer: **87113162.9**

(22) Anmeldetag: **09.09.87**

---

(54) **Verfahren zur Herstellung von Terpolymere.**

---

(30) Priorität: **12.09.86 DE 3631070**

(43) Veröffentlichungstag der Anmeldung:
**16.03.88 Patentblatt 88/11**

(45) Bekanntmachung des Hinweises auf die
Patenterteilung:
**18.03.92 Patentblatt 92/12**

(84) Benannte Vertragsstaaten:
**DE ES FR GB IT NL**

(56) Entgegenhaltungen:
**EP-A- 0 014 450**
**EP-A- 0 037 378**

(73) Patentinhaber: **BASF Aktiengesellschaft**
**Carl-Bosch-Strasse 38**
**W-6700 Ludwigshafen(DE)**

(72) Erfinder: **Sanner, Axel, Dr.**
**Lorscher Ring 2c**
**W-6710 Frankenthal(DE)**
Erfinder: **Vogel, Friedrich, Dr.**
**Im kleinen Letten 3**
**W-6706 Wachenheim(DE)**

**Beschreibung**

Die Erfindung betrifft ein Verfahren zur Herstellung eines Terpolymeren aus Acrylsäure, Ethylacrylat und N-tert.-Butylacrylamid durch Suspensionspolymerisation.

In der EP-B1-37 378 wird eine Lösungspolymerisation zur Herstellung eines als Haarfestiger zu verwendenden Polymeren aus Acrylsäure, Ethylacrylat und N-tert.-Butylacrylamid beschrieben, bei der nur durch Einhaltung spezieller Maßnahmen, wie bestimmter Zulaufverhältnisse der Lösung, des Monomerengemisches und der Lösung des freie Radikale bildenden Polymerisationsinitiators eine zufriedenstellende Polymerisation bezüglich Löslichkeit und haarfestigender Wirkung der Polymere erreicht werden kann.

Einer direkten Verwendung der bei der Herstellung erhaltenen alkoholischen oder wäßrig-alkoholischen Lösung dieses Terpolymers für kosmetische Zwecke steht unter Umständen entgegen, daß die Lösung geruchsbildende und toxische Stoffe, wie nicht umgesetzte Monomere und Reaktionsprodukte von Starterradikalen mit Lösungsmitteln und/oder Monomeren enthält, die nicht ohne weiteres vollständig entfernt werden können.

Sie können beispielsweise nicht durch einfaches Abdestillieren des als Lösungsmittel verwendeten Alkohols vollständig entfernt werden. Außerdem bleibt bei der einfachen Abdestillation des Lösungsmittels das Polymer als schwer handhabbarer, nicht rieselfähiger Feststoff zurück. Versuche, über eine Sprühtrocknung ein rieselfähiges Pulver zu erhalten, führten nicht zum Erfolg. Da das obenbezeichnete Terpolymer nicht wasserlöslich ist, ist eine Reinigung mit Hilfe einer Wasserdampfdestillation nur sehr schwierig durchzuführen. Aus diesen Gründen ist ein reines Terpolymer, ob in Lösung oder als rieselfähiges Pulver, relativ schwer zu erhalten.

Die EP-A-0 014 450 betrifft ein Verfahren Zur Herstellung einer wäßrigen, stabilen Polymerdispersion durch Polymerisieren eines Vinylmonomeren, eines ungesättigten Carbonsäureamids und gegebenenfalls einer ungesättigten Carbonsäure in Gegenwart eines Schutzkolloids unter Verwendung eines Redox-Initiator-Systems.

Aufgabe der Erfindung ist es, ein Verfahren zur Herstellung eines Terpolymeren aus Acrylsäure, Ethylacrylat und N-tert.-Butylacrylamid zur Verfügung zu stellen, bei dem das Endprodukt direkt in gut handhabbarer, rieselfähiger und geruchsfreier Form anfällt.

Die Lösung der Aufgabe besteht in einem Verfahren zur Herstellung eines Terpolymeren aus, bezogen auf das Gewicht der Monomeren,

46 bis 56 Gew.% N-tert.-Butylacrylamid,

37 bis 45 Gew.% Ethylacrylat und

6 bis 9 Gew.% Acrylsäure,

das dadurch gekennzeichnet ist, daß man eine Suspensionspolymerisation durchführt, bei der man

a) die Monomeren einzeln oder in Mischung unter Rühren in Wasser, das 0,05 bis 1,5 Gew.% Schutzkolloid und 0,1 bis 1,0 Gew.% Regler, jeweils bezogen auf das Gesamtgewicht der Monomeren, enthält, einträgt, daß eine 25 bis 50gew.-%ige Mischung entsteht,

b) die erhaltene Mischung unter Rühren auf 60 bis 80°C erwärmt und bei diesen Temperaturen 15 Minuten bis eine Stunde lang rührt, bis eine homogene Emulsion entstanden ist,

c) anschließend die Menge des Initiators von 0,1 bis 1,0 Gew.%, bezogen auf das Gesamtgewicht der Monomeren, in Form von wasserunlöslichen organischen Peroxiden oder Azoverbindungen in einem Zeitraum von 1 bis 9 Stunden so zudosiert, daß eine Polymerisationstemperatur von 70 bis 100°C eingehalten wird, und

d) nach der anschließenden Auspolymerisation das erhaltene Terpolymer mit einem Molekulargewicht von 20.000 bis 80.000, bestimmt durch Lichtstreuung, abfiltriert, mit Wasser wäscht und trocknet.

Gegebenenfalls wird nach dem Auspolymerisieren bei 100°C eine Wasserdampfdestillation in an sich üblicher Weise zwischengeschaltet. Zweckmäßig wird Wasserdampf von ca. 100°C oder überhitzter Wasserdampf durchgeblasen, bis ca. das 0,5-bis 2-fache des vorhandenen Wassers ausgetauscht ist.

Der überraschende Effekt des erfindungsgemäßen Verfahrens liegt darin, daß durch eine einfach durchzuführende Suspensionspolymerisation ein festes, weitgehend staubfreies, rieselfähiges und auch geruchsfreies Terpolymer erhalten wird, das die geforderten anwendungstechnischen Eigenschaften voll erfüllt.

Es war nicht ohne weiteres zu erwarten gewesen, daß mit dem in Wasser unlöslichen Ethylacrylat, der in Wasser löslichen Acrylsäure und dem an sich festen N-tert.-Butylacrylamid, das in Wasser praktisch unlöslich ist (0,7 Gew.% bei 25°C), eine Suspensionspolymerisation ohne Schwierigkeiten durchgeführt werden kann.

Als Kern des erfindungsgemäßen Verfahrens ist die Kombination von verhältnismäßig wenig Regler für das Molekulargewicht und relativ geringen Mengen an Initiatoren hervorzuheben. Nur dadurch wird es möglich, bei den sehr reaktionsfähigen Monomeren, die sonst sofort zu hohen Molekulargewichten polymerisieren würden, die angestrebten Molekulargewichtsbereiche von 20.000 bis 80.000 zu erhalten.

Im einzelnen wird das erfindungsgemäße Verfahren wie folgt erläutert:

Die bevorzugte Zusammensetzung des Terpolymeren ist 50 bis 53 Gew.% N-tert.-Butylacrylamid, 40 bis 42 Gew.% Ethylacrylat und 7 bis 9 Gew.% Acrylsäure.

Zur Herstellung der wäßrigen Monomerenemulsion wird unter Rühren das N-tert.-Butylacrylamid zweckmäßigerweise in seiner festen Form eingetragen, während die flüssigen Monomeren Ethylacrylat und Acrylsäure in ihrer Mischung oder einzeln zugesetzt werden können.

Die vorgelegte Menge Wasser enthält ein polymeres Schutzkolloid, wobei eine Menge von 0,1 bis 0,5 Gew.%, bezogen auf das Gesamtgewicht der Monomeren, bevorzugt ist, und 0,1 - 1 Gew.% eines Reglers.

Es können die üblichen, dem Fachmann bekannten Schutzkolloide verwendet werden. Hervorzuheben sind Polyvinylalkohol mit Molekulargewichten von 200.000 bis 1.000.000 und darüber, Polyvinylpyrrolidon mit Molekulargewichten von 30.000 bis 1,5 Mio. und Polyacrylsäure mit Molekulargewichten von 200.000 bis 1.000.000.

Die Mischung wird, wie bei Suspensionspolymerisationen üblich, unter starkem Rühren auf 60 bis 80°C erwärmt. Dabei schmilzt das in der Größtmenge vorhandene N-tert.-Butylacrylamid und die Mischung wird in eine homogene wäßrige Suspension überführt.

Der Regler für das Molekulargewicht wird gegebenenfalls in Form einer Lösung der vorgelegten Wassermenge oder der Suspension der Monomeren zugesetzt. Als Regler haben sich an sich bekannte Mercaptoverbindungen, die vollständig oder wenigstens teilweise in Wasser löslich sind und die insgesamt 2 bis 6 C-Atome aufweisen, bewährt:

Beispielsweise Alkylmercaptane, wie n-Butylmercaptan, Mercaptoalkohole, wie 2-Mercaptoethanol und 2-Mercaptopropanol, Mercaptocarbonsäuren, wie Thioglykolsäure und Cystein.

Es sei erwähnt, daß die Regler für das Molekulargewicht bei der vorliegenden Suspensionspolymerisation vorteilhaft in verhältnismäßig geringen Mengen von 0,1 bis 1,0 Gew.%, bevorzugt 0,2 bis 0,5 Gew.%, bezogen auf das Gesamtgewicht der Monomeren, verwendet werden.

Als für die vorliegende Suspensionspolymerisation freie Radikale bildende Initiatoren werden wasserunlösliche organische Peroxide oder Azoverbindungen, die keine toxischen Zerfallsprodukte liefern und Halbwertszeiten von etwa einer Stunde bei Temperaturen von 70 bis 120°C aufweisen, verwendet.

Hervorzuhebende Initiatoren sind: Perester oder Diacylperoxide, insbesondere tert.-Butylper-2-ethylhexanoat und Dilaurylperoxid.

Die Einhaltung einer Polymerisationstemperatur zwischen 70 und 100°C mit der Zugabe des Inititiators bereitet in der Praxis keine Schwierigkeiten. Es werden in einem Zeitraum von 1 bis 9 Stunden, bevorzugt 4 bis 7 Stunden, etwa halbstündlich in kleinen und mit der Zeit steigenden Mengen die Inititiatoren zugegeben.

Anschließend wird 1-6, vorzugsweise 2-4 Stunden, auspolymerisiert.

Es empfiehlt sich, eine Wasserdampfdestillation durchzuführen.

Nach dem Abkühlen wird abfiltriert, gewaschen und getrocknet.

Die erhaltenen Terpolymere zeichnen sich durch Molekulargewichte von 20.000 bis 80.000, bestimmt nach der Lichtstreuungsmethode, aus. Sie fallen in Form von rieselfähigen Perlen mit einem durchschnittlichen Durchmesser von 0,2 bis 1,5 mm an. Das erhaltene Terpolymer kann ohne Schwierigkeiten als Haarfixiermittel in den an sich üblichen Zubereitungen, wie sie beispielsweise in G. Nowak, Die kosmetische Praxis, Verlag für die chemische Industrie, Augsburg 1984, oder der europäischen Patentanmeldung 62 002 beschrieben sind, verwendet werden.

Beispiel 1

51 Gew.-Teile N-tert.-Butylacrylamid, 42,2 Gew.-Teile Ethylacrylat und 7,3 Gew.-Teile Acrylsäure werden nacheinander in 250 Gew.-Teilen Wasser, das 0,2 Gew.-Teile Polyacrylsäure vom Molekulargewicht 250.000 als Schutzkolloid und 0,3 Gew.-Teile 2-Mercaptoethanol als Regler enthält, unter Rühren bei Raumtemperatur eingebracht. Die erhaltene Mischung wird unter Rühren auf 70°C erwärmt und 30 Minuten bei dieser Temperatur gehalten, wobei eine homogene Emulsion entsteht.

Anschließend werden 0,175 Gew.-Teile tert.-Butyl-per-2-ethylhexanoat in kleinen Mengen unter Einhaltung des in der Tabelle angegebenen Zeit- und Temperaturverlaufs zugegeben.

| Zeit h | Menge Gew.-Teile | °C |
|--------|------------------|-----|
| 0 | 0,005 | 70 |
| 0,5 | 0,006 | 70 |
| 1,0 | 0,008 | 80 |
| 1,5 | 0,009 | 80 |
| 2,0 | 0,011 | 90 |
| 2,5 | 0,012 | 90 |
| 3,0 | 0,014 | 90 |
| 3,5 | 0,015 | 90 |
| 4,0 | 0,017 | 90 |
| 4,5 | 0,018 | 90 |
| 5,0 | 0,060 | 90 |

Nach Zugabe der letzten Portion Initiator wird noch 3,5 Stunden lang bei 90°C auspolymerisiert.

Anschließend wird bei 100°C Wasserdampf durchgeblasen, bis innerhalb von 4 Stunden ca. 300 Gew.-Teile Wasser überdestilliert sind, wobei restliches monomeres N-tert.-Butylacrylamid vollständig entfernt wird.

Die erhaltene Polymersuspension wird abfiltriert und zur Entfernung feinster ungelöster Partikel mit Wasser gewaschen und im Luftstrom bei Temperaturen von ca. 50°C getrocknet, wobei ein rieselfähiges Pulver mit durchschnittlichen Teilchengrößen von 0,3 - 1,5 mm erhalten wird. Das Molekulargewicht beträgt 35.000.

## Patentansprüche

1. Verfahren zur Herstellung eines Terpolymeren aus, bezogen auf das Gewicht der Monomeren,
   46 bis 56 Gew.% N-tert.-Butylacrylamid,
   37 bis 45 Gew.% Ethylacrylat und
   6 bis 9 Gew.% Acrylsäure,
   dadurch gekennzeichnet, daß man eine Suspensionspolymerisation durchführt, bei der man
   a) die Monomeren einzeln oder in Mischung unter Rühren in Wasser, das 0,05 bis 1,5 Gew.% Schutzkolloid und 0,1 bis 1,0 Gew.% Regler, jeweils bezogen auf das Gesamtgewicht der Monomeren, enthält, einträgt, daß eine 25 bis 50gew.-%ige Mischung entsteht,
   b) die erhaltene Mischung unter Rühren auf 60 bis 80°C erwärmt, bei diesen Temperaturen 15 Minuten bis eine Stunde lang rührt, bis eine homogene Emulsion entstanden ist,
   c) die Menge des Initiators von 0,1 bis 1,0 Gew.%, bezogen auf das Gesamtgewicht der Monomeren, in Form von wasserunlöslichen organischen Peroxiden oder Azoverbindungen in einem Zeitraum von 1 bis 9 Stunden so zudosiert, daß eine Polymerisationstemperatur von 70 bis 100°C eingehalten wird, und
   d) nach anschließender Auspolymerisation das erhaltene Terpolymer vom Molekulargewicht von 20.000 bis 80.000 abfiltriert, mit Wasser wäscht und trocknet.

2. Verfahren nach Anspruch 1, dadurch gekennzeichnet, daß man nach dem Auspolymerisieren eine Wasserdampfdestillation durchführt.

## Claims

1. A process for the preparation of a terpolymer of from 46 to 56% by weight of N-tert-butylacrylamide, from 37 to 45% by weight of ethyl acrylate and from 6 to 9% by weight of acrylic acid,
   the percentages being based on the weight of the monomers, wherein a suspension polymerization is carried out in which
   a) the monomers are introduced individually or as a mixture, with stirring, into water which contains from 0.05 to 1.5% by weight of a protective colloid and from 0.1 to 1.0% by weight of a regulator, the percentages being based on the total weight of the monomers, so that a 25-50% strength by weight mixture is formed,
   b) the resulting, stirring mixture is heated to 60-80°C and stirred at this temperature for from 15 minutes to 1 hour until a homogeneous emulsion has formed,
   c) the amount of initiator from 0.1 to 1.0% by weight, based on the total weight of the monomers, in the form of water-insoluble organic peroxides or azo compounds, is then metered in in the course of from 1 to 9 hours in such a way that a polymerization temperature of from 70 to 100°C is maintained, and

d) after the subsequent complete polymerization, the resulting terpolymer having a molecular weight of from 20,000 to 80,000 is filtered off, washed with water and dried.

2.  A process as claimed in claim 1, wherein, after complete polymerization, steam distillation is carried out.

**Revendications**

1.  Procédé de préparation d'un terpolymère à partir de
46 à 56% en poids de N-tert.-butylacrylamide,
37 à 45% en poids d'acrylate d'éthyle et
6 à 9% en poids d'acide acrylique
par rapport au poids des monomères, caractérisé en ce qu'on procède à une polymérisation en suspension dans laquelle

a) on introduit les monomères individuellement ou en mélange, sous agitation, dans de l'eau qui contient, par rapport au poids total des monomères, de 0,05 à 1,5% en poids de colloïde protecteur et de 0,1 à 1,0% en poids de régulateur, de manière à former un mélange à 25-50% en poids,

b) on chauffe à 60-80°C sous agitation le mélange obtenu et on l'agite à cette température pendant 15 mn à 1 h, jusqu'à ce qu'il soit formé une émulsion homogène,

c) on ajoute la quantité de l'initiateur, de 0,1 à 1,0% en poids par rapport au poids total des monomères, sous la forme de peroxydes organiques ou de composés azoïques insolubles dans l'eau, en un laps de temps de 1 à 9 h, en dosant cette addition de façon à maintenir une température de polymérisation de 70 à 100°C, et

d) après l'achèvement de la polymérisation subséquente, on sépare par filtration le terpolymère obtenu, d'un poids moléculaire de 20 000 à 80 000, on le lave à l'eau et on le sèche.

2.  Procédé selon la revendication 1, caractérisé en ce qu'à la suite de l'achèvement de la polymérisation, on procède à un entraînement à la vapeur.